# EUROPEAN PATENT APPLICATION

(11) **EP 1 962 477 A1**
(43) Date of publication of application: **27.08.2008**
(21) Application number: 07003672.8
(22) Date of filing: 22.02.2007
(51) Int. Cl.: H04M 1/22, H04M 1/02

(54) **Telecommunication device with illumination structure**

(71) Applicant: Giga-Byte Communications, Inc., Hsin-Tien Taipei County (TW); Giga-Byte Technology Co., Ltd., Hsin-Tien Taipei-Hsien (TW)
(72) Inventor: Wang, Ming-Sheng, Hsin-Tien Taipei County (TW)
(74) Representative: Rapp, Bertram

(57) **Abstract**

An illumination structure of a telecommunication device with a housing. The illumination structure comprises a printed circuit board (102), a supporting member (104) and an illuminating apparatus (103). The printed circuit board (102) is disposed in the housing (101). The supporting member (104) is disposed on the printed board (102). The illuminating apparatus (103) is disposed on the supporting member (104) and electrically coupled to the printed circuit board (102).

## Description

### BACKGROUND OF THE INVENTION

### Field of the Invention

The invention relates to a telecommunication device, and in particular, to a telecommunication device comprising an illuminating apparatus.

### Description of the Related Art

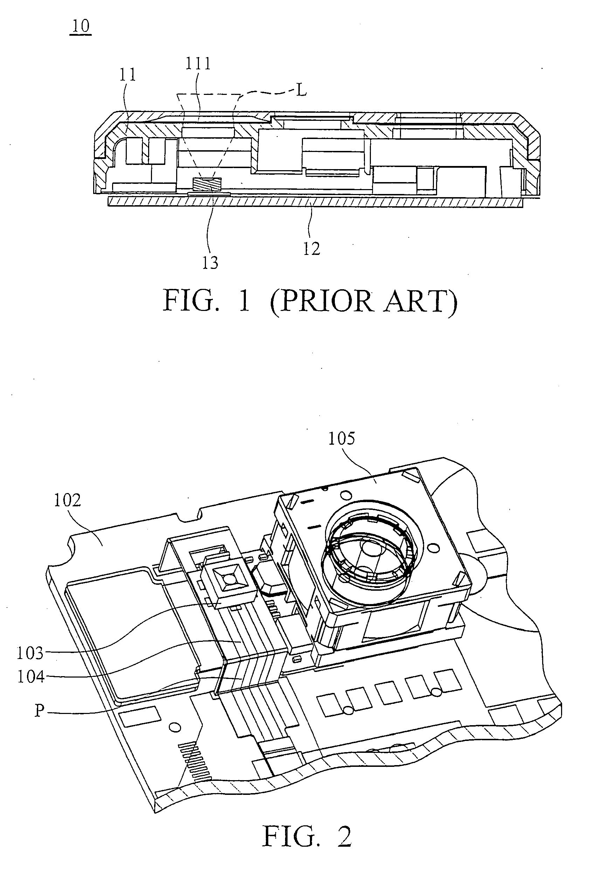

Conventionally, telecommunication devices with image capturing function are either designed without an illuminating apparatus or the illuminating apparatus is present on the printed circuit board, but positioned overly low. Referring to Fig. 1, a conventional telecommunication device 10 comprises a housing 11, a printed circuit board 12 and an illuminating apparatus 13. The housing 11 has an opening 111, the printed circuit board 12 is disposed in the housing 11, and the illuminating apparatus 13 is directly disposed on the printed circuit board 12; wherein light L provided by the illuminating apparatus 13 is emitted through the opening 111.

The illuminating apparatus 13 of the conventional telecommunication device 10 is directly provided on the printed circuit board 12, such that light L provided by the illuminating apparatus 13 does not effectively pass through the opening 111 of the housing 11. decreasing light intensity.

A conventional solution is to enlarge the opening, allowing all of light L to pass through the opening. However, enlarging the opening weakens the overall structure of the telecommunication device 10.

### BRIEF SUMMARY OF THE INVENTION

The invention provides an illumination structure of a telecommunication device with a housing. The illumination structure comprises a printed circuit board, a supporting member, and an illuminating apparatus. The printed circuit board is disposed in the housing. The supporting member is disposed on the printed board. The illuminating apparatus is disposed on the supporting member and electrically coupled to the printed circuit board.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a sectional view of a conventional telecommunication device;

Fig. 2 is a schematic view of a telecommunication device of the invention;

Fig. 3 is a schematic view of a supporting member of the invention; and

Fig. 4 is a sectional view of the telecommunication device of the invention.

### DETAILED DESCRIPTION OF THE INVENTION

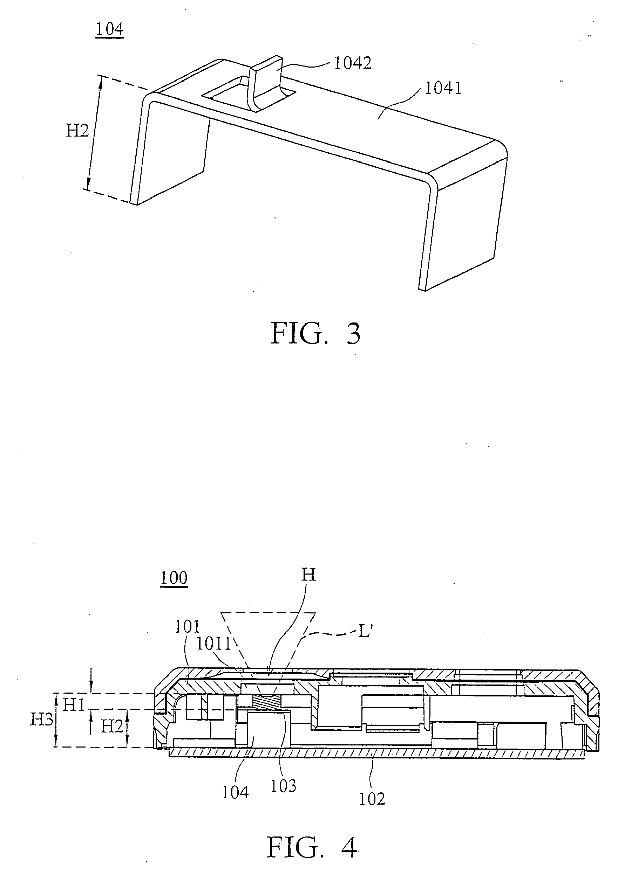

Referring to Figs. 2-4, the embodiment provides a telecommunication device 100 comprising a housing 101, a printed circuit board 102, an illuminating apparatus 103, a supporting member 104 and an image capture module 105. The housing 101 comprises a transparent member 1011, disposed in an opening H of the housing 101. The printed circuit board 102 is disposed in the housing 101 (as shown in Fig. 4). It should be noted that the illuminating apparatus 103 is a flash or spotlight in this embodiment.

The illuminating apparatus 103, coupled to the printed circuit 102 by a circuit line P (as shown in Fig. 2), has a first height (as shown in Fig. 4). The supporting member 104, formed by an angled metal plate, comprises a body 1041 and a positioning member 1042 (as shown in Fig. 3). The body 1041, welded to the printed circuit board 102, has a second height H2 (as shown in Fig. 4). The body 1041 and the positioning member 1042 extended thereon are integrally formed as a single piece.

The illuminating apparatus 103 is fixed to the body 1041 of the supporting member 104 and abutted to the positioning member 1042, maintaining the relative position of the illuminating apparatus 103 and the transparent member 1011 of the housing 101. As a result, light L' provided by the illuminating apparatus 103 can pass through the transparent member 1011, emitting from the opening H.

Referring to Fig. 4, a third height H3 is perpendicularly formed between the transparent member 1011 of the housing 101 and the printed circuit board 102. The first height H1 of the illuminating apparatus 103 plus the second height H2 of the supporting member 104 substantially equal the third height H3. Because the first height H1 plus the second height H2 substantially equal the third height H3, the illuminating apparatus 103 abuts the transparent member 1011 when the illuminating apparatus 103 is mounted on the supporting member 104.

It should be noted that the illuminating apparatus 103 abuts the transparent member 1011 in the embodiment, but is not limited thereto. The illuminating apparatus 103 can be separated from the transparent member 1011.

Referring to Fig. 2 again, the image capture module 105 is disposed on the printed circuit board 102. The image capture module 105 and the illuminating apparatus 103 are adjacent to each other, such that the illuminating apparatus 103 provides sufficient light for image capture.

In the embodiment, the supporting member 104 supports and mounts the illuminating apparatus 103, shortening the distance between the illuminating apparatus 103 and the opening H'. Total amount of light L' from the illuminating apparatus 103 passes through the opening H' without enlarging the opening, increasing overall brightness provided by telecommunication device 100.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An illumination structure for a telecommunication device with a housing, comprising:
a printed circuit board, disposed in the housing;
a supporting member, disposed on the printed circuit board; and
an illuminating apparatus, disposed on the supporting member and electrically coupled to the printed circuit board.

2. The illumination structure as claimed in claim 1, wherein the illuminating apparatus has a first height, the supporting member has a second height, and a third height is between the printed circuit and the housing; the first height plus the second height substantially equaling the third height.

3. The illumination structure as claimed in claim 2, wherein the third height is a perpendicular distance between the housing and the printed circuit board.

4. The illumination structure as claimed in claim 1, wherein the supporting member comprises a body and a positioning member, and the positioning member is extended from the body.

5. The illumination structure as claimed in claim 4, wherein the illuminating apparatus abuts the positioning member.

6. The illumination structure as claimed in claim 4, wherein the positioning member and the body are integrally formed as a single piece.

7. The illumination structure as claimed in claim 1, wherein the illuminating apparatus is a flash or spotlight.

8. An illumination structure for a telecommunication device with a housing, comprising:
a printed circuit board, disposed in the housing;
a supporting member, disposed on the printed circuit board; and
an illuminating apparatus, disposed on the supporting member and electrically coupled to the printed circuit board;
wherein the supporting member supports the illuminating apparatus and allows the illuminating apparatus to abut the housing.

9. The illumination structure as claimed in claim 8 wherein the supporting member comprises a body and a positioning member, and the positioning member is extended from the body.

10. The illumination structure as claimed in claim 9, wherein the illuminating apparatus abuts the positioning member.

11. The illumination structure as claimed in claim 9, wherein the positioning member and the body are integrally formed as a single piece.

12. The illumination structure as claimed in claim 8, wherein the illuminating apparatus is a flash or spotlight.

13. A telecommunication device, comprising:
a housing;
a printed circuit board, disposed in the housing;
a supporting member, disposed on the printed circuit board; and
an illuminating apparatus, disposed on the supporting member and electrically coupled to the printed circuit board.

14. The telecommunication device as claimed in claim 13, wherein the housing comprises a transparent member, and the illuminating apparatus abuts the transparent member.

15. The telecommunication device as claimed in claim 13, further comprising an image capture module, disposed on the printed circuit board and adj acent to the illuminating apparatus.

16. The telecommunication device as claimed in claim 13, wherein the illuminating apparatus has a first height, the supporting member has a second height, and a third height is between the printed circuit and the housing; the first height plus the second height substantially equaling the third height.

17. The telecommunication device as claimed in claim 16, wherein the housing comprises a transparent member, corresponding to the illuminating apparatus.

18. The telecommunication device as claimed in claim 17, wherein the third height is a perpendicular distance between the transparent member and the printed circuit board.

## Amended claims

### Amended claims in accordance with Rule 137(2) EPC.

**1.** An illumination structure for a telecommunication device with a housing, comprising:
a printed circuit board, disposed in the housing;
a supporting member, disposed on the printed circuit board; and
an illuminating apparatus, disposed on the supporting member and electrically coupled to the printed circuit board;
wherein the supporting member supports the illuminating apparatus, allowing the illuminating apparatus to reach the housing.

**2.** The illumination structure as claimed in claim 1, wherein the illuminating apparatus has a first height, the supporting member has a second height, and a third height is between the printed circuit and the housing; the first height plus the second height substantially equaling the third height.

**3.** The illumination structure as claimed in claim 2, wherein the third height is a perpendicular distance between the housing and the printed circuit board.

**4.** The illumination structure as claimed in claim 1, wherein the supporting member comprises a body and a positioning member, and the positioning member is extended from the body.

**5.** The illumination structure as claimed in claim 4, wherein the illuminating apparatus abuts the positioning member.

**6.** The illumination structure as claimed in claim 4, wherein the positioning member and the body are integrally formed as a single piece.

**7.** The illumination structure as claimed in claim 1, wherein the illuminating apparatus is a flash or spotlight.

**8.** A telecommunication device, comprising:
a housing;
a printed circuit board, disposed in the housing;
a supporting member, disposed on the printed circuit board; and
an illuminating apparatus, disposed on the supporting member and electrically coupled to the printed circuit board;
wherein the supporting member supports the illuminating apparatus, allowing the illuminating apparatus to reach the housing.

**9.** The telecommunication device as claimed in claim 8, wherein the housing comprises a transparent member, and the illuminating apparatus abuts the transparent member.

**10.** The telecommunication device as claimed in claim 8, further comprising an image capture module, disposed on the printed circuit board and adjacent to the illuminating apparatus.

**11.** The telecommunication device as claimed in claim 8, wherein the illuminating apparatus has a first height, the supporting member has a second height, and a third height is between the printed circuit and the housing; the first height plus the second height equaling the third height.

**12.** The telecommunication device as claimed in claim 11, wherein the housing comprises a transparent member, positioned corresponding to the illuminating apparatus.

**13.** The telecommunication device as claimed in claim 12, wherein the third height is a perpendicular distance between the transparent member and the printed circuit board.
